# EUROPÄISCHE PATENTANMELDUNG

(11) **EP 3 961 990 A1**
(43) Veröffentlichungstag der Anmeldung: **02.03.2022**
(21) Anmeldenummer: 20193491.6
(22) Anmeldetag: 28.08.2020
(51) Int. Cl.: H04L 12/28, H04L 29/08

(54) **BEREITSTELLEN VON EINEM DIENST IN EINEM KNOTEN EINES CYBER-PHYSIKALISCHEN SYSTEMS MIT WENIGSTENS ZWEI ANWENDUNGSMODULEN**

(71) Anmelder: Siemens Aktiengesellschaft, 80333 München (DE)
(72) Erfinder: LACHENMAYR, Markus, 80992 München (DE); FRÖHLICH, Joachim, 85614 Kirchseeon (DE); IONESCU, TUDOR, 1190 Wien (AT)

(57) **Zusammenfassung**

Die Erfindung betrifft ein rechnerimplementiertes Verfahren zum Bereitstellen von wenigstens einem Dienst (10, 24) in einem Knoten beziehungsweise Prozess eines Cyber-physikalischen Systems mit wenigstens zwei Anwendungsmodulen (12, 14, 16), wobei eine Kommunikation zwischen den wenigstens zwei Anwendungsmodulen (12, 14, 16) über jeweilige anwendungsmodulspezifische angebotene Anwendungsschnittstellen (18, 20, 22, 26) der wenigstens zwei Anwendungsmodule (12, 14, 16) erfolgt, wobei eine jeweilige der anwendungsmodulspezifischen angebotenen Anwendungsschnittstellen (18, 20, 22, 26) einen Kommunikationszugang zum jeweiligen Anwendungsmodul darstellt.

Erfindungsgemäß werden zumindest die anwendungsmodulspezifischen angebotenen Anwendungsschnittstellen (18, 20, 22, 26) der wenigstens zwei Anwendungsmodule (12, 14, 16) durch ein Ankoppelmodul (28, 30) implementiert, welches die Kommunikation zwischen den wenigstens zwei Anwendungsmodulen (12, 14, 16) herstellt und welches den wenigstens einen Dienst (10, 24) aktivierbar bereitstellt.

## Beschreibung

Die Erfindung betrifft ein rechnerimplementiertes Verfahren zum Bereitstellen von wenigstens einem Dienst in einem Knoten beziehungsweise Prozess eines Cyber-physikalischen Systems mit wenigstens zwei Anwendungsmodulen, wobei eine Kommunikation zwischen den wenigstens zwei Anwendungsmodulen über jeweilige anwendungsmodulspezifische angebotene Anwendungsschnittstellen der wenigstens zwei Anwendungsmodule erfolgt, wobei eine jeweilige der anwendungsmodulspezifischen angebotenen Anwendungsschnittstellen einen Kommunikationszugang zum jeweiligen Anwendungsmodul darstellt. Ferner betrifft die Erfindung ein Rechnerprogrammprodukt umfassend ein Programm für eine Rechnereinheit. Weiterhin umfasst die Erfindung einen elektronisch lesbaren Datenträger mit darauf gespeicherten elektronisch lesbaren Steuerinformationen. Darüber hinaus betrifft die Erfindung ein Cyber-physikalisches System mit einem Knoten beziehungsweise Prozess, der wenigstens zwei Anwendungsmodule aufweist, wobei ein jeweiliges der wenigstens zwei Anwendungsmodule eine jeweilige anwendungsmodulspezifische angebotene Anwendungsschnittstelle aufweist, über die eine Kommunikation zwischen den wenigstens zwei Anwendungsmodulen erfolgt, wobei eine jeweilige der anwendungsmodulspezifischen angebotenen Anwendungsschnittstellen einen Kommunikationszugang zum jeweiligen Anwendungsmodul darstellt. Schließlich betrifft die Erfindung auch ein Ankoppelmodul.

Gattungsgemäße rechnerimplementierte Verfahren, Rechnerprogrammprodukte sowie elektronisch lesbare Datenträger sind im Stand der Technik ebenso umfänglich bekannt, ebenso wie Cyber-physikalische Systeme und Ankoppelmodule. Die gattungsgemäßen Verfahren, Rechnerprogrammprodukte und elektronisch lesbare Datenträger dienen insbesondere der Nutzung in einem Cyber-physikalischen System. Ein Cyber-physikalisches System (englisch: cyber-physical System; CPS) bezeichnet einen Verbund von informationstechnischen beziehungsweise softwaretechnischen Komponenten mit mechanischen und/oder elektronischen Vorrichtungen, die über eine Dateninfrastruktur, beispielsweise ein Kommunikationsnetzwerk wie ein lokales oder ein globales Kommunikationsnetzwerk, insbesondere das Internet, miteinander in Kommunikationsverbindung stehen. Insbesondere kann es sich dabei um einen Betriebssystemprozess handeln, innerhalb dessen kommuniziert wird, beispielsweise indem Anwendungsmodule miteinander kommunizieren.

Ein Cyber-physikalisches System zeichnet sich unter anderem durch einen hohen Grad an Komplexität aus. Cyber-physikalische Systeme weisen in der Regel ein oder mehrere eingebettete Systeme auf, die mittels den Kommunikationsnetzwerken miteinander kommunikationstechnisch in Verbindung stehen. Ein Cyber-physikalisches System kann zum Beispiel ein intelligentes Stromnetz, eine neuartige Industrieanlage, die sich dynamisch an jeweilige Produktionsbedingungen anpassen kann, ein Roboter und/oder dergleichen sein. Cyber-physikalische Systeme können zum Beispiel auch medizinische Geräte beziehungsweise Systeme, altersgerechte Assistenzsysteme, Verkehrssteuerungssysteme, Verkehrslogistiksysteme, vernetzte Sicherheitssysteme, vernetzte Fahrassistenzsysteme für Fahrzeuge, industrielle Prozesssteuerungssysteme, Automatisierungssysteme, Umweltbeeinflussungs- und Beobachtungssysteme, Energieversorgungsmanagementsysteme, militärische Vernetzungssysteme, Infrastruktursysteme für Kommunikation und Kultur und/oder dergleichen sein. Darüber hinaus finden sie Anwendung bei Autonomic Computing, welches Möglichkeiten der Selbstkonfiguration, der Selbstoptimierung und -heilung umfassen kann. Autonomic Computing ermöglicht Fehlererkennung und Fehlertoleranz in rechnerbasierten Systemen. Autonomic Computing betrifft unter anderem die Selbstorganisation beziehungsweise eine Einsatzebene.

Bei Cyber-physikalischen Systemen besteht Bedarf an Steuerbarkeit und Beobachtbarkeit des Cyber-physikalischen Systems, beispielsweise von Attributen von Cyber-physikalischen Systemen, die autonom agieren, in wechselnden Umgebungen betrieben werden können und deshalb schnell zu entwickelnde beziehungsweise ändernde System- beziehungsweise Produkteigenschaften aufweisen und/oder mit geringen Systemressourcen in engen Grenzen betrieben werden können.

Dieser Bedarf hat verschiedene Facetten:
- Ein Mangel an Kontrolle über Performanceattribute von Rechnerprogrammen von Cyber-physikalischen Systemen, die zum Beispiel auf Feldgeräte verteilt sind und dort ablaufen.
- Systemserviceebenen für Funktionen der Rechnerprogramme des Cyber-physikalischen Systems sind schwer zu bestimmen und deshalb schwierig sicherzustellen.
- Systemserviceebenen für Funktionen der Rechnerprogramme des Cyber-physikalischen Systems, die sich bei verschiedenen Modi ändern und verschiedene Lebenszyklusphasen aufweisen.
- Es ist schwierig zu bestimmen, wie Funktionen von Cyber-physikalischen Systemen von Systemklienten genutzt werden, beispielsweise in Bezug auf Nutzungsprofile, Frequenz, Datenein- beziehungsweise -ausgabe und/oder dergleichen.
- Aufwendiges Überwachen und Testen von Feldgeräten.
- Programmiersprachen, Programmierwerkzeuge sowie providerspezifische Lösungen sind komplex, schwer zu adaptieren beziehungsweise konsistent zu konfigurieren und im Übrigen in anwendungsspezifischen Umgebungen schwierig zu auditieren.
- Wenn das Rechnerprogramm eines Cyber-physikalischen Systemknotens beziehungsweise -teils adaptierbar ist, dann gewöhnlich vor einer Systemlaufzeit.

Diese Probleme werden verschärft durch komplexe Systeme mit kurzen System-, Produkt-, Merkmalslebenszyklen und komplizierten Systemstrukturen. Verfahren, die Programmentwicklung und -bereitstellung (DevOps) kombinieren und damit die Geschwindigkeit erhöhen, neue, aktualisierte und/oder geänderte Programmmerkmale zu einem Zielsystem zu führen, erschweren ferner die Situation.

Bisher konnten die vorgenannten Probleme lediglich im Rahmen von Re-Build, Test, Re-Deploy einer ganzen Systemprogrammierung behandelt werden. Dies sind jedoch aufwendige, teure und zeitaufwendige Prozesse. Bisher ist es ferner üblich, eine Aspekt-orientierte Programmierung (AOP) vorzusehen. So können Cross-Cutting beziehungsweise Cross-Functional Services (CFS) beziehungsweise übergreifende funktionale Dienste, die einige Teile des Programmsystems betreffen, wie beispielsweise Logging von Performance Eigenschaften sowie auch Performance Auditing, in spezifischen Code Blocks organisiert sein. Spezifische Softwareteile werden mit den benötigten CFS versehen. Spezifische Compiler übersetzen die CFS in Rechnerprogramme auf Source-Code-Basis oder auf Maschinen-Code-Basis.

Darüber hinaus können Performancedienste und Laufzeitumgebungen von CPS nur vor der Laufzeit konfiguriert werden. Die Konfiguration beziehungsweise Adaption von Performancediensten, Parametern von CPS-Anwendungen und ihre Harmonisierung mit Betriebssystemdiensten beziehungsweise -parametern ist eine Anwendungsentwicklungsaufgabe. Die Erfindung bezieht sich auf die vorgenannten Probleme, insbesondere in Bezug auf Cyber-physikalische Systeme.

Der Erfindung liegt deshalb die Aufgabe zugrunde, ein gattungsgemäßes Verfahren, insbesondere für ein Cyber-physikalisches System, ein Rechnerprogrammprodukt, einen elektronisch lesbaren Datenträger, ein Cyber-physikalisches System sowie ein Ankoppelmodul dahingehend weiterzubilden, dass die vorgenannten Probleme reduziert werden können.

Als Lösung werden mit der Erfindung ein Verfahren, ein Rechnerprogrammprodukt, ein elektronisch lesbarer Datenträger, ein Cyber-physikalisches System sowie ein Ankoppelmodul gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass zumindest die anwendungsmodulspezifischen angebotenen Anwendungsschnittstellen der wenigstens zwei Anwendungsmodule durch ein Ankoppelmodul implementiert werden, welches die Kommunikation zwischen den wenigstens zwei Anwendungsmodulen herstellt und welches den wenigstens einen Dienst aktivierbar bereitstellt.

In Bezug auf ein gattungsgemäßes Rechnerprogrammprodukt wird insbesondere vorgeschlagen, dass das Programm Programmcodeabschnitte eines Programms zum Ausführen der Schritte eines Verfahrens gemäß der Erfindung aufweist, wenn das Programm durch die Rechnereinheit ausgeführt wird, sodass wenigstens ein Dienst in einer Kommunikation zwischen wenigstens zwei Anwendungsmodulen eines Cyber-physikalischen Systems aktivierbar bereitgestellt wird.

In Bezug auf einen gattungsgemäßen elektronisch lesbaren Datenträger mit darauf gespeicherten elektronisch lesbaren Steuerinformationen wird insbesondere vorgeschlagen, dass die Steuerinformationen zumindest ein Rechnerprogrammprodukt gemäß der Erfindung umfassen und derart ausgestaltet sind, dass bei Steuerung einer Rechnereinheit unter Nutzung der Steuerinformationen des Datenträgers die Rechnereinheit das Verfahren der Erfindung durchführt.

In Bezug auf ein gattungsgemäßes Cyber-physikalisches System wird mit der Erfindung insbesondere vorgeschlagen, dass das Cyber-physikalische System ein Ankoppelmodul aufweist, in welchem zumindest die anwendungsmodulspezifischen angebotenen Anwendungsschnittstellen der wenigstens zwei Anwendungsmodule implementiert sind und welches ausgebildet ist, die Kommunikation zwischen den wenigstens zwei Anwendungsmodulen herzustellen und wenigstens einen Dienst aktivierbar bereitzustellen.

In Bezug auf ein gattungsgemäßes Ankoppelmodul wird insbesondere vorgeschlagen, dass das Ankoppelmodul ausgebildet ist, wenigstens einen Dienst aktivierbar in einer Kommunikation zwischen wenigstens zwei Anwendungsmodulen bereitzustellen, wobei das Ankoppelmodul für das Cyber-physikalische System gemäß der Erfindung ausgebildet ist.

Die Erfindung basiert unter anderem auf dem Gedanken, dass durch das Ankoppelmodul, im Folgenden auch CPS Interface Module (CIM) genannt, Schnittstellen von CPS Funktionsmodulen (englisch: CPS Function Module; CFM) beziehungsweise Anwendungsschnittstellen, beispielsweise des wenigstens einen Anwendungsmoduls, das heißt, Schnittstellen dieser Module aus den CPS Funktionsmodulen extrahiert und in dem separaten Ankoppelmodul zusammengeführt werden können, sodass die Kommunikation zwischen dem wenigstens zwei Anwendungsmodulen über das Ankoppelmodul erfolgen kann. Dadurch wird die Möglichkeit geschaffen, mittels des Ankoppelmoduls beziehungsweise des CIM einen zusätzlichen neuen Dienst aktivierbar bereitzustellen.

Das Anwendungsmodul kann zum Beispiel ein Steuermodul eines Roboterarms oder dergleichen sein. Das Steuermodul kann beispielsweise eine Rechnereinheit aufweisen, die dem Steuern des Roboterarms dient. Die Anwendungsmodule stellen jeweils eine Schnittstelle bereit, nämlich die Anwendungsschnittstelle, die vorzugsweise eine anwendungsmodulspezifische angebotene Anwendungsschnittstelle darstellt. Über diese Schnittstelle stellt das Anwendungsmodul einen Kommunikationszugang bereit, über den beispielsweise Daten ausgetauscht werden können. Die Anwendungsschnittstelle kann zum Beispiel auch als Programmierschnittstelle (englisch: application programming interface; API) ausgestaltet sein, über die ein Programmteil von einem Programmsystem anderen Rechnerprogrammen zur Anbindung an das Programmsystem zur Verfügung gestellt werden kann. Natürlich ist die Erfindung hierauf nicht beschränkt. Dem Grunde nach könnten die Anwendungsmodule auch beide jeweilige Rechnereinheiten oder dergleichen sein.

Über die Schnittstellen ist es möglich, die Kommunikation zwischen den Anwendungsmodulen zu führen. Das erste Anwendungsmodul kann zu diesem Zweck seine Daten über die Anwendungsschnittstelle des zweiten Anwendungsmoduls an das jeweilige zweite Anwendungsmodul übermitteln. Umgekehrt kann das zweite Anwendungsmodul seine Daten über die Anwendungsschnittstelle des ersten Anwendungsmoduls an das erste Anwendungsmodul übermitteln. Dadurch kann eine bidirektionale Kommunikation zwischen den Anwendungsmodulen erreicht werden. Je nach Bedarf kann unter Umständen auch eine unidirektionale Kommunikation zwischen den Anwendungsmodulen ausreichen, beispielsweise wenn eines der Anwendungsmodule durch einen Sensor oder dergleichen gebildet ist, der Sensordaten an das Anwendungsmodul liefert, eines der Anwendungsmodule Bewegungsdaten an das andere der Anwendungsmodule zum Ausführen einer vorgebbaren Bewegung liefert und/oder dergleichen. Darüber hinaus braucht die Erfindung natürlich nicht auf eine Kombination von zwei Anwendungsmodulen begrenzt zu sein. Vielmehr besteht die Möglichkeit, zusätzliche Anwendungs- beziehungsweise Steuermodule ergänzend zu berücksichtigen. Für das Grundprinzip der Erfindung ist dies jedoch nicht relevant.

Das Ankoppelmodul beziehungsweise CIM ermöglicht es nun, dadurch, dass die Schnittstellen im Ankoppelmodul implementiert sind, auf einfache Weise zusätzliche Dienste verfügbar zu machen.

Eine Funktion gibt an, was das Cyber-physikalische System (CPS) ausführen soll. Sie stellt somit eine Operation beziehungsweise einen Betrieb in einer Funktionsdomäne des Cyber-physikalischen Systems dar. Ein solches Cyber-physikalisches System kann zum Beispiel ein Roboterarm mit einem Greifer sein, insbesondere in einer Domäne Zusammenbau von Gütern im weitesten Sinne mit aufgabenbezogenen Funktionen, wie zum Beispiel den Roboterarm bewegen, den Greifer zu öffnen, ein Werkstück ergreifen, in Uhrzeigerrichtung schrauben und/oder dergleichen. Funktionen sind in CPS-Funktionsmodulen (CFN) enthalten beziehungsweise implementiert.

Ein Service kann dagegen das Bestimmen von demjenigen sein, was das Cyber-physikalische System tun soll. Darüber hinaus ist eine Operation in einer Überwachungsdomäne eines Cyber-physikalischen Systems, daher auch extra-funktionaler Service genannt, zum Beispiel ein Dienst zum Überwachen, Testen und Sichern von Funktionen des Cyber-physikalisches Systems. Dienste sind in CPS Service Modulen (CSM) enthalten beziehungsweise implementiert.

Somit kann ein einfacher Mechanismus zwischen zwei oder mehr miteinander kommunizierenden Modulen eines Cyber-physikalischen Systemknotens beziehungsweise -prozesses realisiert werden, um modulare, extra-funktionale Dienste in individuelle Cyber-physikalische Systemknoten beziehungsweise - prozesse dynamisch zu laden, zu steuern, beispielsweise zu aktivieren und zu deaktivieren, und dynamisch zu entfernen, und zwar insbesondere während der Laufzeit des Cyber-physikalischen Systems. Der Mechanismus installiert hierfür Eingriffspunkte (englisch: mount point) im wenigstens einen Ankoppelmodul, an denen die extra-funktionalen Dienste in separaten zielgerichteten Dienste-Modulen, die während der Laufzeit eines Cyber-physikalischen Systemknotens beziehungsweise -prozesses dynamisch sein können, eingreifen können, gesteuert werden können und auch wieder abgekoppelt werden können.

Extra-funktionale Dienste können das Überwachen und Testen von individuellen Funktionen und Daten, die Kostenplanung von Ressourcen, beispielsweise Ausführzeiten für Funktionen, Anzahl der Aktivierung von Funktionen, einen Umfang der Funktionen, das Prüfen von Funktionenzugriffsrechten, das Auswählen und Umschalten zwischen alternativen, jedoch unterschiedlichen Funktionenimplementierungen, zum Beispiel in Rückfallsituationen oder Übernahmesituationen, und das Testen von Bedingungen zwischen miteinander kommunizierenden Funktions-Modulen umfassen. Die Funktions-Module können zum Beispiel Anwendungsmodule sein.

Das Integrieren von Eingriffspunkten in einen Cyber-physikalischen Systemknoten beziehungsweise -prozess mittels des vorgeschlagenen Mechanismus der Erfindung ändert nicht die Struktur beziehungsweise Implementierung der Cyber-physikalischen Funktionen in den miteinander kommunizierenden Funktions-Modulen.

Die Funktions-Module sind vorzugsweise zumindest teilweise durch eine oder mehrere Rechnereinheiten bereitgestellt, die mit einem geeigneten Rechnerprogramm betrieben werden. Dem Grunde nach besteht jedoch auch die Möglichkeit, eines oder mehrere der Funktions-Module zumindest teilweise auch mittels einer entsprechend geeigneten Hardwareschaltung zu realisieren. Besonders vorteilhaft erweist es sich, wenn die Funktions-Module zumindest teilweise Cloud-basiert realisiert sind beziehungsweise bereitgestellt werden. Dadurch besteht die Möglichkeit, die Funktions-Module nahezu unabhängig von einem Ort für die gewünschte Funktion bereitzustellen und gegebenenfalls auch zu warten.

Das Cyber-physikalisches System, insbesondere das Anwendungsmodul, kann eine elektronische Schaltung, eine Rechnereinheit, Kombinationen hiervon und/oder dergleichen aufweisen. Die Rechnereinheit kann derart eingerichtet sein, dass sie das Verfahren gemäß der Erfindung zumindest teilweise ausführen kann, zu welchem Zweck sie mittels des Rechnerprogramms entsprechend gesteuert wird. Sowohl die Rechnereinheit als auch die elektronische Schaltung können durch einen oder mehrere Halbleiter-Chips gebildet sein. Darüber hinaus kann das Cyber-physikalische System, insbesondere das Anwendungsmodul, auch diskrete elektronische Bauelemente sowie Kombinationen mit Halbleiter-Chips aufweisen. Insbesondere kann das Cyber-physikalische System, insbesondere das Anwendungsmodul, eine Speichereinheit umfassen, in der zumindest teilweise Trainingsdatensätze hinterlegt sein können. Darüber hinaus kann in der Speichereinheit zumindest teilweise das Rechnerprogramm für die Rechnereinheit gespeichert sein. Das Cyber-physikalisches System kann zumindest teilweise auch Cloud-basiert ausgebildet sein. Insbesondere kann die Rechnereinheit als verteilte Rechnereinheit ausgebildet sein, vorzugsweise zumindest teilweise eine Cloud bildend ausgebildet sein.

Das vorgenannte Rechnerprogrammprodukt kann mittels eines rechnerlesbaren Speichermediums bereitgestellt sein. Darüber hinaus kann das Rechnerprogramm direkt in einen internen Speicher der Rechnereinheit ladbar sein. So ist es beispielsweise möglich, das Rechnerprogramm aus einem Netzwerk, insbesondere dem Internet, von einer Datenquelle, beispielsweise einem Server, herunterzuladen und in einem internen Speicher der Rechnereinheit zu laden, sodass die Rechnereinheit das Rechnerprogramm ausführen kann. Vorzugsweise umfasst das Rechnerprogrammprodukt ein rechnerlesbares Medium, auf welchem die Programmkodeabschnitte gespeichert sind. Ein solches rechnerlesbares Medium kann beispielsweise ein Speicherbaustein, beispielsweise ein PROM, eine Compact-Disk, ein USB-Stick oder dergleichen sein.

Das Cyber-physikalische System ist unter Nutzung des Ankoppelmoduls ausgebildet, wenigstens einen Dienst in einer Kommunikation zwischen wenigstens zwei Anwendungsmodulen bereitstellen zu können. Zu diesem Zweck sieht das Ankoppelmodul vor, dass im Ankoppelmodul zumindest die Anwendungsschnittstelle von wenigstens einem der wenigstens zwei Anwendungsmodule implementiert ist. Darüber hinaus weist das Ankoppelmodul einen aktivierbaren Dienst auf, der - wie oben bereits erläutert - in die Kommunikation zwischen dem Steuermodul und dem Anwendungsmodul eingreifen kann, und zwar vorzugsweise an einem vorgegebenen beziehungsweise vorgebbaren Eingriffspunkt, und der entsprechend gesteuert werden kann. Der Eingriffspunkt kann automatisiert ermittelt werden, beispielsweise abhängig von der Kommunikation zwischen den wenigstens zwei Anwendungsmodulen.

Darüber hinaus kann der Dienst natürlich auch abgekoppelt werden, insbesondere wenn er nicht mehr benötigt wird. Das Ankoppelmodul ist somit zwischen den wenigstens zwei Anwendungsmodulen zwischengeschaltet und stellt die Kommunikationsverbindung zwischen diesen beiden Anwendungsmodulen her. Dadurch besteht die Möglichkeit, ohne die bisherige bestimmungsgemäße Funktion in Bezug auf die Kommunikation zwischen den wenigstens zwei Anwendungsmodulen zu stören, zusätzliche Dienste bedarfsweise bereitzustellen und zu aktivieren beziehungsweise zu deaktivieren. Dadurch kann das Cyber-physikalische System insgesamt verbessert werden, insbesondere hinsichtlich seiner Flexibilität und Nutzung.

Darüber hinaus wird vorgeschlagen, dass der wenigstens eine Dienst über eine Diensteschnittstelle des Ankoppelmoduls geladen wird. Zu diesem Zweck kann das Ankoppelmodul über die Diensteschnittstelle mit einer entsprechenden Datenbank beziehungsweise Datenquelle beziehungsweise Dienstequelle in Kommunikationsverbindung stehen. Beispielsweise kann vorgesehen sein, dass ein vorgegebener Dienst von einer Zentrale gesteuert über die Diensteschnittstelle in das Ankoppelmodul geladen wird. Das Ankoppelmodul kann zu diesem Zweck beispielsweise steuerungstechnisch mit der Zentrale Kommunikationsverbindung stehen.

Darüber hinaus wird vorgeschlagen, dass der wenigstens eine Dienst nach dem Laden im Ankoppelmodul betrieben wird. Durch das Betreiben des Dienstes im Ankoppelmodul ist es also möglich, den entsprechenden Dienst zu nutzen und zur Verfügung zu stellen. Darüber hinaus besteht natürlich auch die Möglichkeit, durch das Betreiben des Dienstes eine Steuerungsmöglichkeit für das Ankoppelmodul, insbesondere für den betriebenen Dienst, bereitzustellen, um beispielsweise weitere Funktionalitäten im Hinblick auf die Nutzung des Dienstes steuern zu können. Darüber hinaus können natürlich auch durch die Nutzung des Dienstes erfasste und/oder ermittelte Daten bereitgestellt werden.

Vorzugsweise wird der wenigstens eine Dienst nach dem Betreiben aktivierbar bereitgestellt. Dadurch kann die Nutzung des Dienstes, insbesondere in Bezug auf die Kommunikationsverbindung, bedarfsgerecht gesteuert werden. Der Dienst braucht somit nicht permanent aktiviert zu sein. Es kann jedoch vorgesehen sein, dass das Betreiben des Dienstes zugleich auch seine Aktivierung beinhaltet. Vorzugsweise ist jedoch die Aktivierung des Dienstes separat vom Betreiben des Dienstes, welches es erlaubt, Beeinflussungen aufgrund der Nutzung des Dienstes möglichst gering halten zu können.

Gemäß einer Weiterbildung wird vorgeschlagen, dass für den wenigstens einen Dienst ein Eingriffspunkt ermittelt wird. Durch den Eingriffspunkt kann die Funktion des Dienstes an die Kommunikation in der Kommunikationsverbindung in einer geeigneten Weise angekoppelt werden, sodass die gewünschte Nutzung des Dienstes realisiert werden kann. Der Eingriffspunkt kann zum Beispiel eine bestimmte Stelle in einer Signal- beziehungsweise Datenfolge der Kommunikation sein. Zu diesem Zweck kann vorgesehen sein, dass die Kommunikation in der Kommunikationsverbindung mittels des Dienstes oder auch durch das Ankoppelmodul selbst erfasst und ausgewertet wird, um den günstigsten Eingriffspunkt ermitteln zu können. Beim Aktivieren des Dienstes wird dieser dann an dem entsprechenden ermittelten Eingriffspunkt eingekoppelt.

Vorzugsweise wird der Dienst abhängig von einem Steuersignal aktiviert. Dieses Steuersignal kann ein Steuersignal sein, welches das Ankoppelmodul von einer separaten Einheit, beispielsweise der Zentrale oder dergleichen, erhält. Dem Grunde nach besteht natürlich auch die Möglichkeit, dass das Steuersignal durch wenigstens eines der wenigstens zwei Anwendungsmodule bereitgestellt wird. Das Ankoppelmodul kann das Steuersignal unmittelbar für den wenigstens einen Dienst bereitstellen. Natürlich kann auch vorgesehen sein, dass das Ankoppelmodul das Steuersignal zunächst auswertet und den Dienst dann abhängig vom Auswerten aktiviert.

Darüber hinaus wird vorgeschlagen, dass ein Funktionsaufruf eines der Anwendungsmodule ermittelt wird und mittels des aktivierten Dienstes Daten des Funktionsaufrufs erfasst werden. Dadurch wird die Möglichkeit geschaffen, die Funktion des Anwendungsmoduls zu erfassen, insbesondere zu überwachen und vorzugsweise auch entsprechende Daten über den aktivierten Dienst bereitzustellen. Diese Daten können zum Beispiel an die Zentrale, einen Nutzer des Cyber-physikalischen Systems oder dergleichen übermittelt werden. Natürlich können die Daten gegebenenfalls auch unter Nutzung des Ankoppelmoduls gespeichert werden. Die Daten können Betriebsdaten bezüglich des wenigstens einen Anwendungsmoduls sein.

Weiterhin wird vorgeschlagen, dass eine Funktionsantwort eines der Anwendungsmodule ermittelt wird und mittels des aktivierten Dienstes Daten der Funktionsantwort erfasst werden. Dadurch kann beispielsweise die Funktionsbereitschaft des Anwendungsmoduls ermittelt werden. Auch hier können die Daten zum Beispiel entweder mittels des Ankoppelmoduls gespeichert werden, insbesondere abrufbar gespeichert werden, oder auch an die Zentrale übermittelt werden. Die Funktion des Cyber-physikalischen Systems kann dadurch weiter verbessert werden.

Es wird ferner vorgeschlagen, dass die erfassten Daten ausgewertet werden und zumindest der Funktionsaufruf oder die Funktionsantwort abhängig vom Auswerten der Daten angepasst werden, bevor der Funktionsaufruf beziehungsweise die Funktionsantwort vom jeweiligen Ankoppelmodul an das jeweils andere Anwendungsmodul übermittelt wird. Bei dieser Ausgestaltung kann sich der Dienst des Ankoppelmoduls somit in die Kommunikation zwischen den wenigstens zwei Anwendungsmodulen zwischenschalten und auf die Kommunikation Einfluss nehmen. Dadurch kann die Flexibilität in Bezug auf die Steuerung des Cyber-physikalischen Systems weiter verbessert werden. Beispielsweise können ergänzende Betriebsvorgaben oder Sicherheitsvorgaben mittels des Ankoppelmoduls, insbesondere des wenigstens einen Dienstes, ergänzend durch das Cyber-physikalische System verfügbar gemacht werden.

Gemäß einer Weiterbildung wird vorgeschlagen, dass der Dienst die Kommunikation zwischen dem wenigstens zwei Anwendungsmodulen erfasst, hinsichtlich vorgegebener Daten analysiert und abhängig von dem Analysieren ein Meldesignal abgibt. Dadurch kann die Funktion des Cyber-physikalischen Systems besser überwacht werden, zum Beispiel in Bezug auf Betriebsparameter, Funktionen, gestörte Zustände und/oder dergleichen. Die Betriebssicherheit des Cyber-physikalischen Systems kann dadurch weiter verbessert werden.

Vorzugsweise wird im Rahmen des Analysierens ermittelt, ob eines der Anwendungsmodule bestimmungsgemäß funktioniert. Dies betrifft die Nutzung des Cyber-physikalischen Systems insgesamt und kann beispielsweise sicherheitsrelevant sein. Darüber hinaus kann dies auch aus nutzungstechnischer Sicht irgendeines Cyber-physikalischen Moduls relevant sein, beispielsweise bei einer Herstellung von Produkten oder dergleichen. Beispielsweise kann ermittelt werden, ob eines der wenigstens zwei Anwendungsmodule einen gestörten Betriebszustand hat, defekte Daten an das jeweils andere Anwendungsmodul übermittelt und/oder dergleichen. Die Sicherheit und die Nutzbarkeit des Cyber-physikalischen Systems können dadurch verbessert werden.

Insbesondere kann vorgesehen sein, dass abhängig von der bestimmungsgemäßen Funktion des wenigstens einen Anwendungsmoduls die Kommunikation zwischen wenigstens einem der wenigstens zwei Anwendungsmodule und einem dritten Anwendungsmodul hergestellt wird. Dies erlaubt es, eine Redundanz zu schaffen, sodass der Cyber-physikalische Systemknoten weiter bestimmungsgemäß betrieben werden kann. Dieser Fall kann zum Beispiel relevant sein, wenn das Anwendungsmodul eine Störung aufweist und das Anwendungsmodul nicht entsprechend weiter betrieben werden kann. Dies kann mittels des Dienstes des Ankoppelmoduls ermittelt werden. Darüber hinaus kann der Dienst auch ermitteln, dass ein anderes drittes Anwendungsmodul verfügbar ist, welches die Steuerung des Anwendungsmoduls übernehmen kann, und die Kommunikation zu diesem dritten Anwendungsmodul umleiten. Zu diesem Zweck kann dann zum Beispiel in die Kommunikationsverbindung eingegriffen werden und die Kommunikationsverbindung vom ersten gestörten Anwendungsmodul zu einem dritten betriebsbereiten Anwendungsmodul hergestellt werden. Dadurch kann die Zuverlässigkeit des Cyber-physikalischen Systems weiter verbessert werden.

Weiterhin wird vorgeschlagen, dass der Dienst zumindest eines der wenigstens zwei Anwendungsmodule identifiziert und abhängig von der Identifikation aktiviert wird. Der Dienst braucht daher nicht nur beispielsweise von der Zentrale aktiviert werden zu können, sondern seine Aktivierung kann auch davon abhängig sein, welche Anwendungsmodule gerade aktuell in Kommunikationsverbindung stehen. Dadurch kann die Nutzung eines spezifischen Dienstes an spezifische Anwendungsmodule automatisiert angepasst werden. Es brauchen hierfür keine separaten Steuerfunktionen vorgesehen zu sein.

Die für das erfindungsgemäße Verfahren angegebenen Vorteile und Wirkungen gelten natürlich gleichermaßen auch für das erfindungsgemäße Rechnerprogrammprodukt, den erfindungsgemäßen elektronisch lesbaren Datenträger, das erfindungsgemäße Cyber-physikalische System und das erfindungsgemäße Ankoppelmodul beziehungsweise umgekehrt. Infolgedessen können Verfahrensmerkmale auch vorrichtungsmäßig oder umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
- FIG 1: eine schematische Blockdarstellung für einen Cyber-physikalischen Systemknoten beziehungsweise -prozess, bei dem drei Funktionsmodule eines Cyber-physikalischen Systems miteinander in Kommunikation stehen,
- FIG 2: eine schematische Blockdarstellung wie FIG 1, bei der Funktionsmodule kommunikationstechnisch über Ankoppelmodule des Cyberphysikalischen Systems gekoppelt sind,
- FIG 3: in einer schematischen Blockdarstellung wie FIG 2 einer detaillierten Darstellung der kommunikationstechnischen Kopplung mittels des Ankoppelmoduls zwischen zwei Funktionsmodulen,
- FIG 4: eine schematische Blockdarstellung einer Knotenkonfiguration gemäß FIG 3,
- FIG 5: eine schematische Darstellung eines Zustandsdiagramms bezüglich der aktiven Bereitstellung eines Dienstes durch das Ankoppelmodul gemäß FIG 3,
- FIG 6 bis 9: schematische Blockdarstellungen bezüglich der Änderung der Struktur beziehungsweise Konfiguration des Cyber-physikalischen Systemknotens beziehungsweise -prozesses ausgehend von einem Zustand gemäß FIG 6 über Zwischenzustände gemäß der FIG 7, 8 bis zum endgültigen Zustand gemäß FIG 9,
- FIG 10 bis 16: schematische Zustandsdarstellungen für unterschiedliche Aktivierungen von verschiedenen Diensten,
- FIG 17: eine schematische Blockdarstellung einer Betriebskonfiguration des Ankoppelmoduls gemäß FIG 5, mit Parameteränderungen eines Dienstes,
- FIG 18: eine schematische Blockdarstellung einer ersten Anwendung mit einem Ablauf, der ein Ankoppelmodul zur Überwachung des Betriebs von einer oder mehreren Funktionsmodulen eines Cyber-physikalischen Systems während des bestimmungsgemäßen Betriebs nutzt, und
- FIG 19: eine schematische Blockdarstellung wie FIG 18 einer zweiten Anwendung zum Eingreifen in eine Funktionsmodul eines Cyber-physikalischen Systems, um eine alternative oder verbesserte Funktionalität oder eine Kommunikationsverbindung zu einem anderen Cyber-physikalischen Systemknoten beziehungsweise -prozess herzustellen.

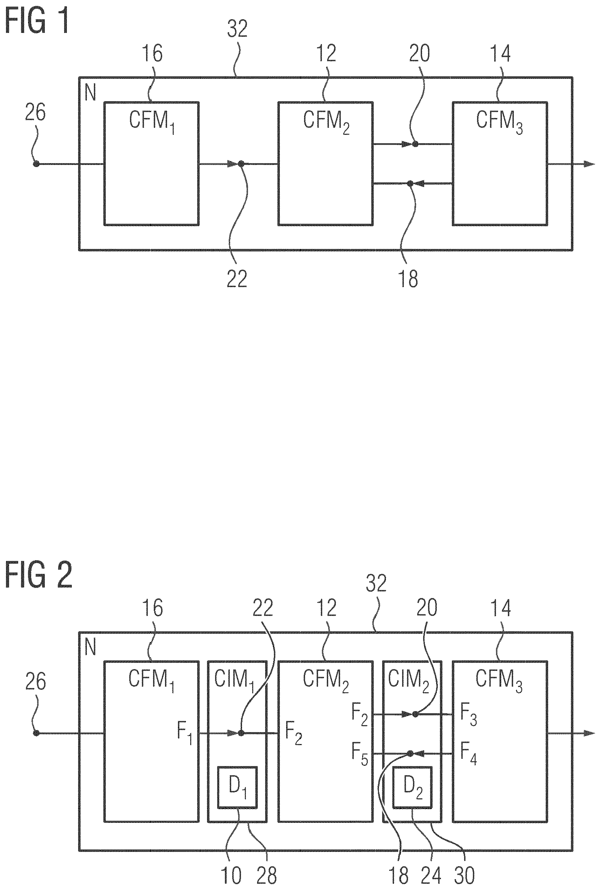

In FIG 1 zeigt in einer schematischen Blockdarstellung einen Cyber-physikalischen Prozess beziehungsweise -knoten 32, der drei Funktionsmodule 12, 14, 16 des Cyber-physikalischen Knotens 32 umfasst. In der vorliegenden Ausgestaltung ist vorgesehen, dass das Funktionsmodul 12 ein Steuermodul ist, welches dazu dient, eine Tätigkeit in einer Funktionsdomäne des Cyber-physikalischen Systems 32 auszuführen. Das Steuermodul ist vorliegend ein Anwendungsmodul. Das Steuermodul 12 dient dazu, für den bestimmungsgemäßen Betrieb der weiteren Funktionsmodule 14, 16, die vorliegend Anwendungsmodule darstellen, bereitzustellen. Die Anwendungsmodule 14, 16 können zum Beispiel ein Roboterarm sein wie das Anwendungsmodul 14 oder auch ein Sensor, wie das Anwendungsmodul 16. Das Prinzip der Erfindung ist jedoch hierauf nicht beschränkt. Auch die Anzahl der Funktionsmodule kann natürlich bedarfsweise variiert werden, ohne den Gedanken der Erfindung zu verlassen.

FIG 1 zeigt den Cyber-physikalischen Systemknoten 32, bei dem das Anwendungsmodul 16 eine Anwendungsschnittstelle 26 bereitstellt, über die eine Kommunikation mit dem Anwendungsmodul 16 von außerhalb des Cyber-physikalischen Systemknotens 32 möglich ist. Das Anwendungsmodul 16 kommuniziert über eine Steuerschnittstelle 22 mit dem Steuermodul 12. Darüber hinaus kommuniziert das Steuermodul 12 über eine Anwendungsschnittstelle 20 des Anwendungsmoduls 14 mit dem Anwendungsmodul 14. Das Anwendungsmodul 14 seinerseits kommuniziert mit dem Steuermodul 12 über eine Steuerschnittstelle 18.

Bei den Funktionsmodulen 12, 14, 16 handelt es sich um Funktionsmodule des Cyber-physikalischen Systemknotens 32 mit Funktionen F_{I}. In einer Ausgestaltung ist es somit möglich, dass das Anwendungsmodul 16, welches einen Sensor repräsentiert, Sensordaten über die Steuerschnittstelle 22 zum Steuermodul 12 überträgt. Das Anwendungsmodul 14, welches ein Roboterarm repräsentieren kann, kann vom Steuermodul 12 Steuerdaten beziehungsweise Steuerbefehle erhalten und Positions- und Betriebsdaten über die Steuerschnittstelle 18 an das Steuermodul 12 übermitteln. Dadurch kann ein bestimmungsgemäßer Betrieb realisiert werden.

Die Ausgestaltung gemäß FIG 1 erweist sich insofern als nachteilig, als dass zusätzliche Dienste nur mit großem Aufwand nachträglich implementiert werden können.

FIG 2 zeigt in einer schematischen Blockdarstellung wie FIG 1, wie zwischen die Funktionsmodule 12, 14, 16 jeweilige Ankoppelmodule 28, 30 zwischengeschaltet sind. Die Anwendungs- und Steuerschnittstellen 18, 20, 22, 26 sind vorliegend von den jeweiligen Funktionsmodulen 12, 14, 16 extrahiert und in den jeweiligen Ankoppelmodule 28, 30 implementiert. Die Ankoppelmodule 28, 30 stellen hier also die Kommunikationsverbindung zwischen den Funktionsmodulen 12, 14, 16 bereit. Mit den Ankoppelmodulen 28, 30 können die Funktionsmodule 12, 14, 16 vollständig entkoppelt werden.

Jeweils zwei der Funktionsmodule 12, 14, 16 kommunizieren vorliegend über ein jeweiliges der Ankoppelmodule 28, 30. Die Kommunikation zwischen den Funktionsmodulen 12, 14, 16 hängt ab beziehungsweise ist bereitgestellt durch die zwischengeschalteten Ankoppelmodule 28, 30. Die Funktionsmodule 12, 14, 16 sind nicht mehr unmittelbar kommunikationstechnisch miteinander gekoppelt.

Die Ankoppelmodule 28, 30 sind ferner nicht abhängig von den Funktionsmodulen 12, 14, 16. Die Ankoppelmodule 28, 30 stellen jedoch die jeweiligen Schnittstellen 18, 20, 22, 26 bereit, über die dann die jeweilige Kommunikation zwischen den Funktionsmodulen 12, 14, 16 vermittelt werden kann.

Wenn die Ankoppelmodule 28, 30 zwischen den Funktionsmodulen 12, 14, 16 zwischengeschaltet sind, bewirken die Ankoppelmodule 28, 30 keinen Überhang neben aktivierten Funktionen des Cyber-physikalischen Systems indirekt über Funktionszeiger.

Die Anwendungsschnittstellen 18, 20, 22, 26 der Funktionen des Cyber-physikalischen Systemknotens 32 und die Implementierungen der Funktionen bleiben unverändert. Die Anwendungsschnittstellen 18, 20, 22, 26 der Funktionsmodule 12, 14, 16 werden aus den jeweiligen Funktionsmodulen 12, 14, 16 herausgelöst und sind durch die Ankoppelmodule 28, 30 erfasst. Diese sind somit zwischen den Funktionsmodulen 12, 14, 16 eingesetzt beziehungsweise zwischengeschaltet, um die Kommunikation in den Funktionsmodulen 12, 14, 16 unter Beibehaltung einer für die Anwendungsschnittstellen 18, 20, 22, 26 definierten Semantik beizubehalten.

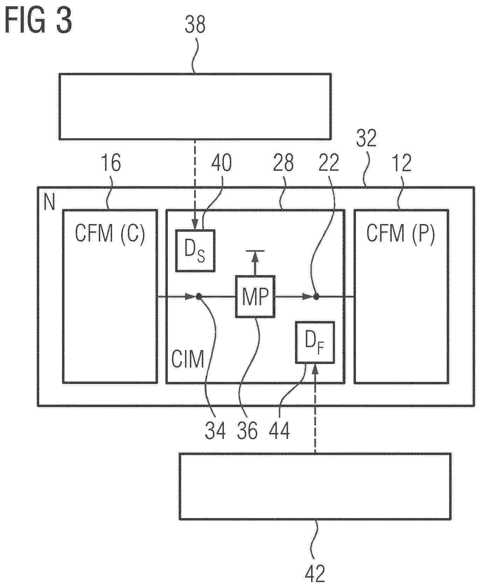

FIG 3 zeigt anhand eines Beispiels unter Nutzung der Funktionsmodule 12, 16 und des Ankoppelmoduls 28, wie ein Angriffspunkt 36 unter Berücksichtigung der Funktionsschnittstellen 22 und einer Funktionsschnittstelle 34 implementiert werden kann, wobei die für die Funktionsschnittstelle 22 definierte Semantik beibehalten werden kann. FIG 3 zeigt den Eingriffspunkt 36 (englisch: Mount Point, Service Hook) in Form eines Beispiels.

Ein Eingriffspunkt implementiert im Allgemeinen eine herausgelöste Schnittstelle aus einer Funktion eines Cyber-physikalischen Systemknotens. Die Implementierung des Eingriffspunkts 36 dient unter anderem dazu, spezifische Funktionen des Cyber-physikalischen Systemknotens 32 anzukoppeln beziehungsweise abzukoppeln, spezifische Dienste 10, 24 des Cyber-physikalischen Systemknotens 32 dynamisch anzukoppeln und abzukoppeln, und Funktionsaufrufe an angekoppelte Dienste 10, 24 und/oder Funktionen des Cyber-physikalischen Systemknotens 32 weiterzuleiten.

Ein Eingriffspunkt wie der Eingriffspunkt 36 ist ein spezifischer Dienst zu einer Funktion des Cyber-physikalischen Systems. Ein Eingriffspunkt wie der Eingriffspunkt 36 ist im Ankoppelmodul 28 enthalten und läuft im Ankoppelmodul 28. Der Eingriffspunkt 36 kann keine oder mehrere dynamisch ladbare spezifische Dienste des Cyber-physikalischen Systems für die gleiche Cyber-physikalische Funktion koppeln. Der Dienst 10, 24 kann zum Beispiel ein Überwachen, ein Testen, ein Einschalten beziehungsweise Ausschalten, ein Sichern und/oder dergleichen umfassen. Spezifische Dienste des Cyber-physikalischen Systems laufen im Funktionsmodul 42 des Cyber-physikalischen Systems.

In FIG 3 lädt ein Servicemodul 38 einen oder mehrere Dienste beziehungsweise Diensteinstanzen mittels einer Diensteeinheit 40 D_{S} in eine Systemlaufzeit des Ankoppelmoduls 28. Diese Dienste werden instanziiert, um CPS-Funktionsinstanzen, die durch eine Funktionseinheit 44 D_{F} geladen und instanziiert worden sind, zu umgeben.

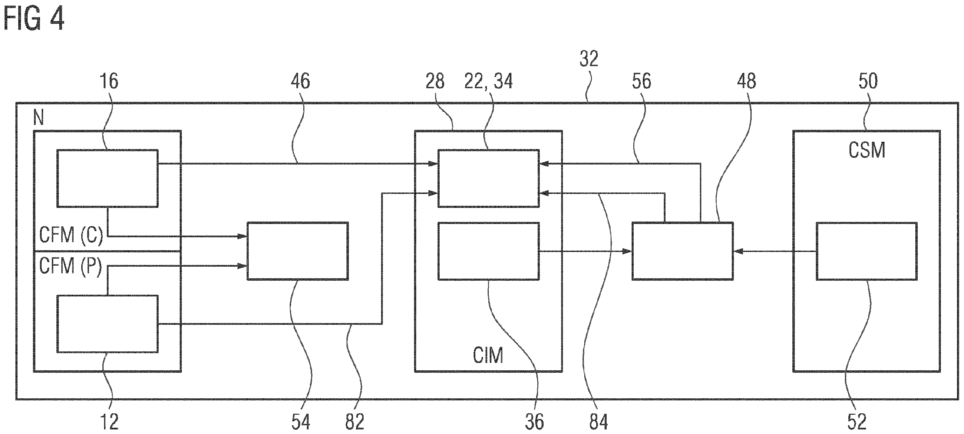

Eingriffspunkte wie der Eingriffspunkt 36 im Ankoppelmodul 28 und alle Dienste, die an den Eingriffspunkten angekoppelt sind, können die Semantik der Anwendungsschnittstellen 20, 34 einhalten, die in das Ankoppelmodul 28 implementiert sind. Die Eingriffspunkte sind somit um Funktionen in den Funktionsmodulen herum realisiert. Ein Eingriffspunkt wie der Eingriffspunkt 36 zeigt eine entsprechende zugeordnete Funktion in einem Funktionsmodul 42 mit der Möglichkeit, den extra-funktionalen Dienst während der Laufzeit des Cyber-physikalischen Systemknotens 32 einzukoppeln, und zwar durch Implementieren der gleichen Anwendungsschnittstelle wie die der zugeordneten Funktion, wie ferner anhand von FIG 4 dargestellt ist.

In FIG 4 bezeichnet 46 einen Funktionsaufruf des Anwendungsmoduls 16, der an das Ankoppelmodul 28 übermittelt wird. Ebenso bezeichnet 82 einen Funktionsaufruf des Steuermoduls 12, der an das Ankoppelmodul 28 übermittelt wird. Mit 54 ist eine Funktion bezeichnet. Im Ankoppelmodul 28 werden die Funktionsaufrufe 46, 82 an eine jeweilige Schnittstelle 22, 34 übermittelt. Darüber hinaus wird ein Eingriffspunkt 36 ermittelt, der an eine Diensteeinheit 48 übermittelt wird. Die Serviceeinheit 48 erhält aus einem Dienstemodul 50 einen spezifischen Dienst 52, der an die Diensteinheit 48 übermittelt wird. Mit 56 beziehungsweise 84 wird ein Aufruf eines nächsten Dienstens oder einer nächsten Funktion an die Schnittstelle 22, 34 übermittelt.

Das Anwendungsmodul 16 ist ein Funktionsmodul des Cyber-physikalischen Systems 32 mit Funktionen in einer Client-Rolle. Das Funktionsmodul 12 ist ein Funktionsmodul mit Funktionen in einer Server-Rolle beziehungsweise Provider-Rolle. Mit den Pfeilen in FIG 4 wird eine Implementierung dargestellt, beispielsweise dass die Funktion 54 durch die Funktionsmodule 12, 16 implementiert ist. Ebenso implementiert die Diensteeinheit 48 den Eingriffspunkt 36 sowie den spezifischen Dienst 52.

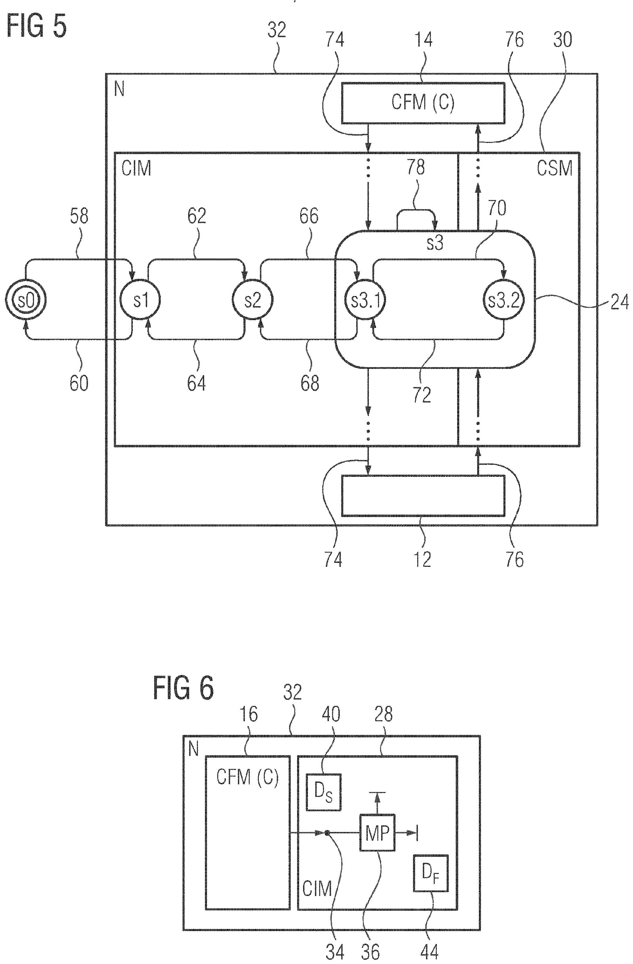

Das folgende erste Programmlisting zeigt einen Knoten-Konfigurationsbetrieb:
01: LOAD <CSM:Service> INTO <CIM> // State s0 → s1 in Figure 5
02: UNLOAD <CSM:Service> FROM <CIM> // State s1 → s0 in Figure 5
03: CREATE <CSM:Service:Instance> FROM <CSM:Service> // State s1 → s2 in Figure 5
04: DELETE <CSM:Service:Instance> FROM <CSM:Service> // State s2 → s1 in Figure 5
05: MOUNT <CSM:Service> (BELOW|ABOVE) <CSM:Service:Instance> // State s2 → s3.1 in Figure 5
06: UNMOUNT <CSM:Service:Instance> // State s3.1 → s2 in Figure 5
07: ENABLE (CALL|RETURN) <CSM:Service:Instance> // State s3.1 → s3.2 in Figure 5
08: DISABLE (CALL|RETURN) <CSM:Service:Instance> // State s3.2 → s3.1 in Figure 5
09: PARAMETER <CSM:Service:Instance> WITH <ParameterName> = <ParameterValue> // State **s3** → s3 in Figure 5

Diese Konfigurationsabläufe steuern die Dienste des Cyber-physikalischen Systems eines Cyber-physikalischen Systemknotens 32 mittels einer Statusmaschine, wie sie anhand von FIG 5 dargestellt ist.

In FIG 5 bezeichnet S0 einen Start- und einen Endzustand, bei dem ein Dienst des Cyber-physikalischen Systems und ein Dienstehosting nicht im Cyber-physikalischen Systemknoten 32 vorhanden ist. Der Zustand S1 bezeichnet ein Dienstemodul, welches geladen ist. Jedoch ist der Dienst noch nicht bereitgestellt. Der Zustand S2 bezeichnet den bereitgestellten Dienst. Der Zustand S3 bezeichnet den Dienst, der an einer spezifischen Stelle eines Dienste-Stacks eingreift. Der Zustand S3.1 bezeichnet den Dienst im deaktivierten Zustand. Der Zustand S3.2 bezeichnet den Dienst im aktivierten Zustand.

Mit 58 ist das Laden des Dienstes in das Ankoppelmodul 30 dargestellt. Es erfolgt somit ein Übergang vom Zustand S0 zum Zustand S1. Mit 62 wird der Dienst bereitgestellt, woraufhin ein Übergang zum Zustand S2 erfolgt. Schließlich wird ein Eingriffspunkt beim Übergang gemäß Bezugszeichen 66 ermittelt, woraufhin der Zustand S3.1 eingenommen wird. Mit 70 ist ein Übergang vom deaktivierten Zustand S3.1 zum aktivierten Zustand S3.2 dargestellt. Nun ist der Dienst aktiv. Mit 78 ist dargestellt, dass der Dienst parametrisiert werden kann.

72 bezeichnet den Übergang vom aktivierten Zustand S3.2 zum deaktivierten Zustand S3.1. Mit 68 wird der Dienst abgekoppelt, sodass der Zustand S2 eingenommen wird. Mit 64 ist ein Übergang zum Zustand S1 dargestellt, bei dem das Bereitstellen des Dienstes aufgehoben wird. Mit 60 kann der Dienst gelöscht werden.

74 bezeichnet einen Funktionsaufruf vom Anwendungsmodul 14 zum Steuermodul 12, wohingegen 76 eine Funktionsantwort vom Steuermodul 12 zum Anwendungsmodul 14 zeigt. FIG 5 zeigt also einen Lebenszyklus eines extra-funktionalen Dienstes im Cyber-physikalischen Systemknoten 32.

Das im Folgenden dargestellte zweite Programmlisting zeigt eine Implementierung der Statusmaschine gemäß Fig. 5. Diese Implementierung realisiert On-Demand-Laden, Instanziieren sowie Aktivieren des Dienstes um eine entsprechende Funktion herum. Natürlich sind auch andere Implementierungen möglich, beispielsweise Implementierungen, die ein separates Laden, Instanziieren oder Aktivieren des Dienstes während einer Dienstphase eines Cyber-physikalischen Systemknotens umfassen, während einer Betriebsphase des Cyber-physikalischen Systemknotens 32, oder dergleichen.
01: MountPoint.F(p1, ...) do // Mount point for services around CPS function F with parameters p1,..., if any.
02: // State s0 in Figure 5
03: if new CPS service(s) specified in the node configuration then
04: load the CSM(s) that contains the new service(s)
05: // State s1 in Figure 5
06: instantiate specified CPS service(s)
07: // State s2 in Figure 5
08: hook CPS service instance(s)
09: // State s3.1 in Figure 5
10: if service(s) enabled in the CPS node / process configuration then
11: enable CPS service instance(s)
12: // State s3.2 in Figure 5
13: for all hooked and enabled CPS services before CPS function do
14: call CPS service S_{before}(p1, ...)
15: call CPS function F(p1, ...)
16: for all hooked and enabled CPS services after CPS function do
17: call CPS service S_{after} (p1, ...)
18: return value from CPS function F or from last CPS service S or default values

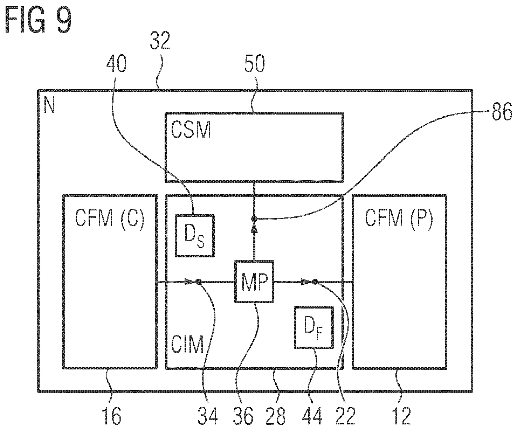

Die FIG 6 bis 9 zeigen noch einmal, wie sich die Struktur beziehungsweise Konfiguration des Cyber-physikalischen Systemknotens 32 ändert, ausgehend von einem Zustand gemäß FIG 6, bei dem ein Funktionsmodul 16 mit wenigstens einem Steuermodul 12 in Kommunikation steht und ein Ankoppelmodul 28 mit einem Eingriffspunkt 36 vorhanden ist, zu einem Zustand gemäß FIG 9, bei dem zusätzlich das folgende Modul geladen wird, nämlich ein Dienstemodul mit einem oder mehreren spezifischen Diensten um das Steuermodul 12 herum. Über eine im Ankoppelmodul 28, 30 implementierte Diensteschnittstelle 86 kann der entsprechende Dienst aus dem Dienstemodul 50 geladen werden.

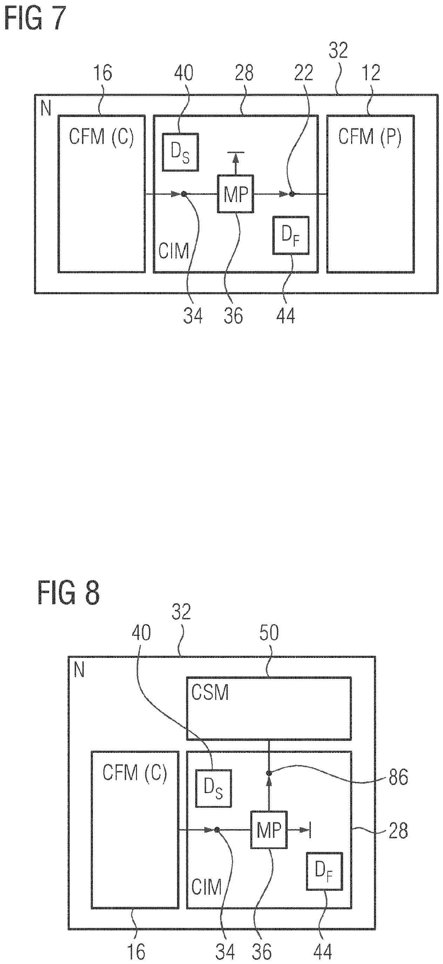

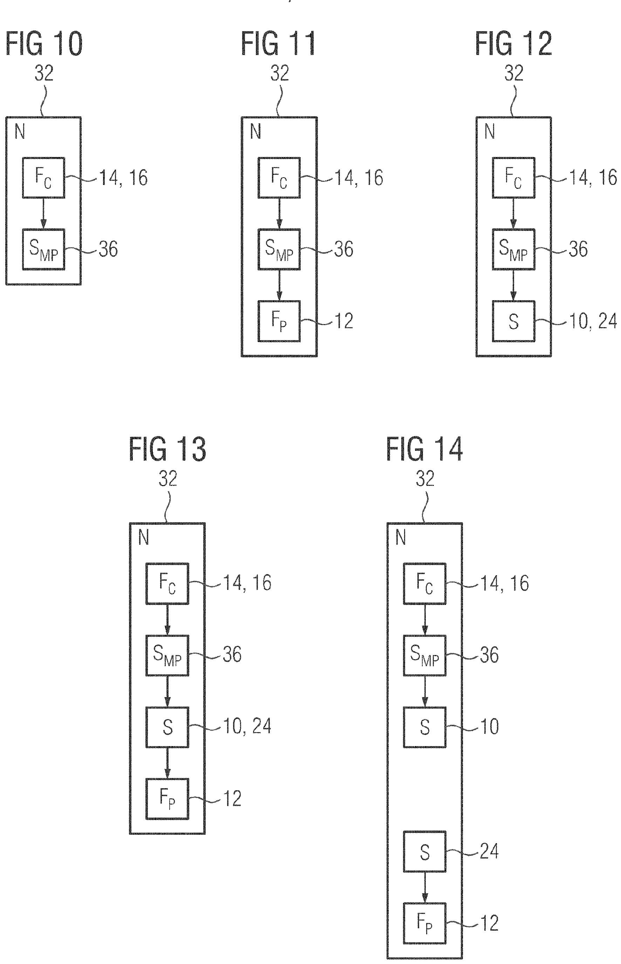

Die FIG 7 und 8 zeigen Zwischenzustände und zwei alternative Übergangspfade. So kann ein Übergangspfad ausgehend von FIG 6 über FIG 7 zu FIG 9 sein, wohingegen ein anderer Übergangspfad ausgehend von FIG 6 über FIG 8 zur FIG 9 sein kann. In allen Konfigurationen von FIG 6 bis FIG 9 ist der Cyber-physikalische Systemknoten beziehungsweise -prozess 32 ausführt. Der vorgeschriebene Mechanismus ermöglicht es, unterschiedlichste Konfigurationen von Diensten für das Cyber-physikalische System zwischen Funktionen des Cyber-physikalischen Systemknotens beziehungsweise -prozesses 32 zu nutzen, wie anhand der weiteren FIG 10 bis 16 dargestellt ist.

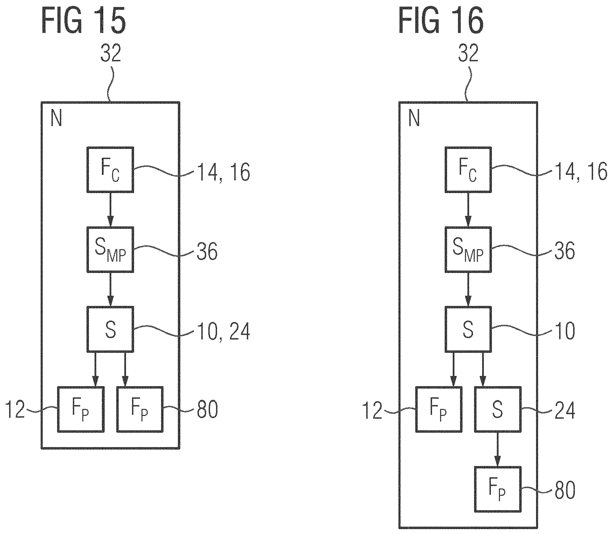

Die FIG 15 und 16 zeigen insbesondere einen FailOver, bei dem das Anwendungsmodul 14, 16 von einem ersten Steuermodul 12 auf ein zweites Steuermodul 80 übergekoppelt wird, beispielsweise wenn das erste Steuermodul 12 gestört ist. Darüber hinaus sind diverse andere Nutzungen ersichtlich, wobei insbesondere auf die voranstehenden Ausführungen verwiesen wird.

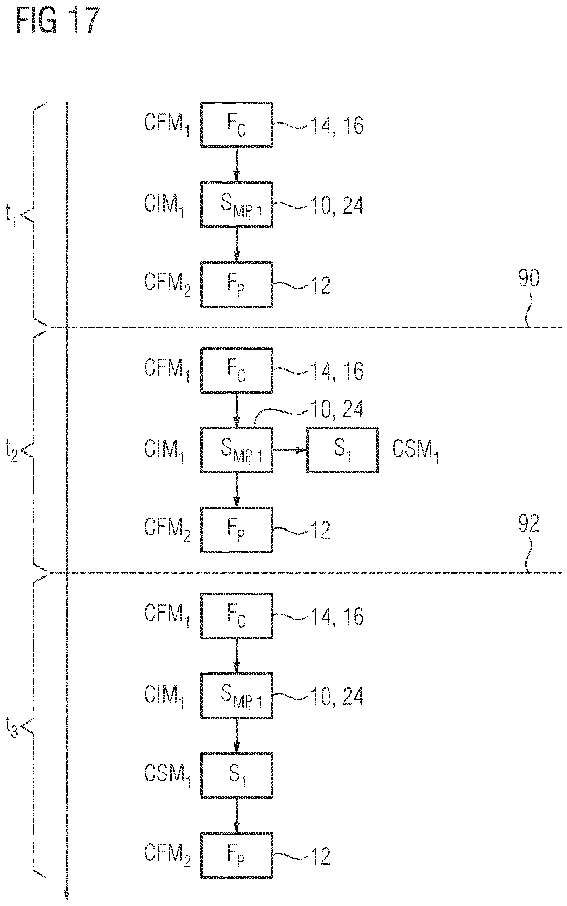

In den FIG 10 bis 16 sind unterschiedliche Zustände dargestellt, zwischen denen gewechselt werden kann. Ein Wechsel vom Zustand gemäß FIG 11 zum Zustand gemäß FIG 12 ist zum Beispiel in FIG 17 dargestellt, wobei ein Parameter eines Dienstes des Cyber-physikalischen Systems geändert wird. Zum Zeitpunkt t₁ ist der Dienst noch nicht angekoppelt. Das Ankoppeln liegt jedoch zum Zeitpunkt t₂ vor, wobei der Dienst jedoch noch deaktiviert ist. Zum Zeitpunkt t₃ ist dann der Dienst aktiviert.

Zum Zeitpunkt t₁ liegt der Zustand gemäß FIG 11 vor, wobei zum Zeitpunkt t₃ der Zustand gemäß FIG 12 vorliegt. Zum Zeitpunkt t₂ ist der Dienst noch deaktiviert.

Mit dem Bezugszeichen 90 ist ein erster Übergang dargestellt, bei dem ein Konfigurationsbetrieb gemäß dem folgenden dritten Listing durchgeführt werden kann:
//State S0 in Figure 5
01: Load CSM₁ INTO CIM₁
02: CREATE S₁ FROM CSM₁
03: MOUNT S₁ AFTER S_{MP,1}
// State S3.1 in Figure 5

Mit dem Bezugszeichen 92 ist ein folgender Übergang vom Zeitpunkt t₂ zum Zeitpunkt t₃ mit einem Konfigurationsbetrieb gemäß dem folgenden vierten Listing vorgesehen:
// State S3.1 in Figure 5
04: PARAMETER S₁ WITH Rate=5
// State S3.1 in Figure 5
05: ENABLE S₁
// State S3.2 in Figure 5

Die folgenden Anwendungsfälle der Erfindung zeigen, wie eine dynamische Analyse von Zustandsparametern eines schlecht funktionierenden Cyber-physikalischen Systemknotens 32 analysiert werden kann.

Hier ist das Ziel, einen tieferen Einblick in das Cyber-physikalische System in Bezug auf den Betrieb im Falle einer Störung, eines ungewöhnlichen Verhaltens und/oder dergleichen zu erhalten, beispielsweise in Bezug auf eine oder mehrere Funktionen, insbesondere Funktionsmodule.

Das Cyber-physikalische System läuft für eine längere Zeit. Plötzlich berichtet ein Login-Dienst eines Cyber-physikalischen Knotens ein Ansteigen von fehlerhaften Serveranfragen. Die Performance des Cyber-physikalischen Systemknotens 32 nimmt ab. Die Log-Mitteilungen des betroffenen Cyber-physikalischen Systemknotens 32 liefern keinen Hinweis für den Grund der Performance-Abnahme. Um einen besseren Einblick in den Betrieb des betroffenen Cyber-physikalischen Systemknotens 32 durch einen Betreiber zu ermöglichen, wird der Betreiber einen erweiterten Gesundheitscheck, beispielsweise unter Nutzung von extra-funktionalen Diensten, durchführen. Der betroffene Cyber-physikalische Systemknoten 32 ist ausgelegt und implementiert, um im degradierten Modus betrieben zu werden. Dadurch kann jedoch nur eine reduzierte suboptimale Systemperformance erreicht werden, was unerwünscht ist.

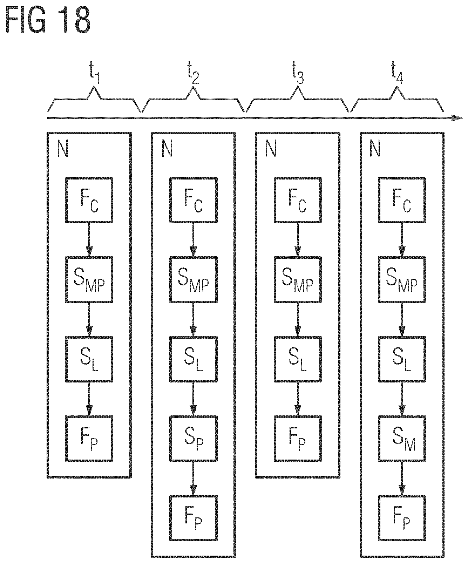

Darüber hinaus tritt der Effekt zum ersten Mal auf. Zum Ausführen einer Analyse unter realistischen aktuellen Bedingungen, installiert und experimentiert der Betreiber mit mehreren, erweiterten Gesundheitschecks während der Laufzeit ohne Re-Deploy und Neustarten des betroffenen Cyber-physikalischen Systemknotens 32, wie anhand von FIG 18 dargestellt. Mit F_{C} ist eine Funktion in einem Funktionsmodul des Cyber-physikalischen Systems in der Rolle eines Anwendungsklienten bezeichnet. Mit F_{P} ist eine Funktion in einem Funktionsmodul des Cyber-physikalischen Systems in der Rolle eines Funktionsproviders beziehungsweise Steuermoduls bezeichnet. Mit S_{MP} ist ein Eingriffspunkt für einen speziellen Dienst in einem Ankoppelmodul bezeichnet. S_{L} bezeichnet einen Log-Funktionsaufruf. S_{P} bezeichnet einen Dienst zum Messen einer Ausführungszeit und S_{M} bezeichnet einen Dienst Dump-Memory.

Das Szenario in FIG 18 läuft unter Nutzung eines Ankoppelmoduls wie folgt ab:
- Zeitpunkt t₁: Der Cyber-physikalische Knoten läuft, jedoch zeigt der Zwischendienst S_{L} eine ungewöhnliche Menge an fehlerhaften Funktionsaufrufen der Funktion F_{P}. Aus Gründen der Performance ist der Dienst S_{L} knapp in Bezug auf eine Dokumentation und speichert nur wenige Daten, zum Beispiel eine Signatur der Funktion F_{P}, Schlüsselfunktionparameter und Funktionsantwortcodes.
- Zeitpunkt t₂: Für einen längeren Zeitraum zeigen die Funktion Antwortcodes eine ansteigende Beanstandungsrate. Die erste Annahme ist, dass überbordende Reaktionszeiten und verpasste Grenzen diese Beanstandungen verursachen. Entsprechend installiert ein Betreiber des Cyber-physikalischen Systems einen Performance-Messdienst S_{P} in Bezug auf die Ausführung der Funktion F_{P}. Der Dienst S_{P} wird geladen und ein Eingriffspunkt in Bezug auf den Dienst S_{L} und den Funktionsaufruf der Funktion F_{P} wird ermittelt.

- Zeitpunkt t₃: Die Performance-Daten, die vom Performance-Messdienst S_{P} geliefert werden, zeigen ein normales Verhalten. Daher scheinen die fehlerhaften Serveranfragen einen anderen Grund zu haben. Der Betreiber des Cyber-physikalischen Systems entkoppelt den Dienst S_{P}. Der Cyber-physikalische Systemknoten 32 ist nun wieder in dem Zustand wie zum Zeitpunkt t₁.
- Zeitpunkt t₄: Nun soll der interne Zustand des Cyber-physikalischen Systemknotens, insbesondere der Status der Funktion F_{P}, in Bezug auf ungewöhnliche Daten analysiert werden. Der Betreiber installiert folglich einen Memory-Scanner S_{M} in Bezug auf die ausgeführte Funktion F_{P}. Der Dienst S_{M} löscht den Speicher, mit dem die Funktion F_{P} vor und nach dem Aufruf der Funktion F_{P} betrieben wurde. Dabei ist zu beachten, dass der Speicher einer Funktion des Cyber-physikalischen Systems in einem separaten reservierten Speichermodul beziehungsweise Datenmodul enthalten sein kann. Ein Datenmodul ist einer spezifischen Funktion des Cyber-physikalischen Systems zugeordnet und entspricht einem Datenbereich in einem Skill-Executed-Context (SEC), den eine Task zum Speichern von Task-internen Daten nutzt.

Der Cyber-physikalische Systemknoten 32 ist zum Testen während der Laufzeit ausgelegt, ohne das zeitliche Verhalten des Cyber-physikalische Systemknotens 32 zu beeinflussen. Die extra-funktionalen Dienste S_{P} und S_{M} implementieren die gleiche Funktionsschnittstelle wie F_{P} und S_{MP}, ohne ihre funktionale Bedeutung zu ändern. Außerdem bleiben beide innerhalb der spezifizierten beziehungsweise erlaubten Zeitgrenzen für die Funktion F_{P}. Daher können die Dienste S_{P} und S_{M}, vorzugsweise beide, zwischengeschaltet werden zwischen den Funktionen F_{C} und F_{P}.

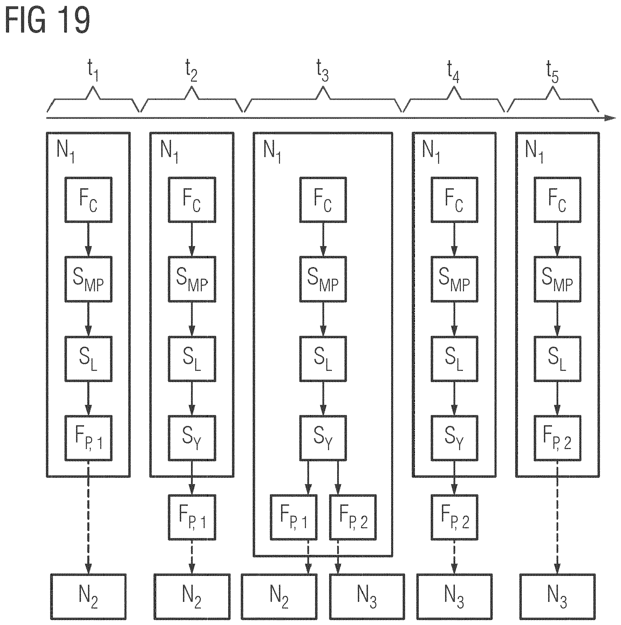

FIG 19 zeigt in einer schematischen Blockdarstellung einen weiteren Anwendungsfall für dynamisches Ändern von Funktionsimplementierungen eines schlecht funktionierenden Cyber-physikalischen Systemknotens N₁ 32 unter Nutzung eines Ankoppelmoduls. Es ist hier das Ziel, eine andere Variante zu einer Funktion, die in einem Funktionsmodul eines Cyber-physikalischen Systems enthalten ist, anzuwenden, um eine alternative oder verbesserte Funktionalität zu ermöglichen oder eine Verbindung zu einem anderen Cyber-physikalischen Systemknoten beziehungsweise -prozess N₂, N₃ zu ermöglichen. Es soll eine aktualisierte Implementierung einer Funktion, die ein externes Datenbasissystems nutzt, angewendet werden. Diese neue Version behebt einen Performance-Mangel einer vorhergehenden Version und nutzt ein anderes Datenbasissystem.

In einer Übergangsperiode sollen nur Entwickler und Tester des Cyber-physikalischen Systems die aktualisierte Implementierung nutzen. Dies ist anhand von FIG 19 dargestellt. Ergänzend bezeichnet F_{P,1} eine erste Version der Funktion F_{P} in der Rolle eines Funktions-Providers, F_{P,2} eine aktualisierte Version 2 der Funktion F_{P} und S_{Y} einen Dienst, der zwischen zwei oder mehreren Funktions-Providern umschaltet. Der gestrichelte Pfeil bezeichnet einen Aufruf einer Funktion eines anderen Cyber-physikalischen Systemknotens.

Der Ablauf gemäß FIG 19 stellt sich wie folgt dar:
- Zeitpunkt t₁: Der Cyber-physikalische Systemknoten ist im Betrieb, jedoch zeigt der Zwischendienst S_{L} eine ungewöhnliche Höhe von schlechten Performance-Aufrufen der Funktion F_{P,1}. Einträge in den Log-Dateien des Cyber-physikalischen Systemknotens 32 und eine Analyse des Quellcodes von der Funktion F_{P,1} zeigt, dass der Grund für die niedrige Performance ein Implementierungsfehler ist.
- Zeitpunkt t₂: Ein Betreiber des Cyber-physikalischen Systems wendet ein Servicemodul mit einem extra-funktionalen Dienst S_{Y} an, der dynamisch ein zweites alternatives Funktionsmodul parallel zu einem bereits angewendeten Funktionsmodul lädt und zwischen den alternativen Funktionsmodulen umschaltet.

- Zeitpunkt t₃: Ein Entwickler des Cyber-physikalischen Systems entwickelt die Funktion F_{P,2}, die eine verbesserte Version der Funktion F_{P,1} ist und wendet diese unter Nutzung des Dienstes S_{Y} an. Das Umschalten kann eingestellt beziehungsweise gesteuert werden, um nur spezialisierte Anfragen zu der neuen Version zu leiten. Dies ermöglicht ein vorgegebenes Testen, indem beispielsweise nur von Anfragen mit speziellen Token vom Testteam zur neueren Version geroutet werden. Nachdem die neue Version F_{P, 2} getestet ist und als zuverlässig und besser ermittelt worden ist, können mit dem Dienst S_{Y} alle Anfragen zur Funktion F_{P,2} geleitet werden.
- Zeitpunkte t₄ und t₅: Entfernen der Funktionen und Dienste aus dem Ankoppelmodul, die nicht weiter benötigt werden.

Anstelle eines vorgegebenen Routings könnte der Dienst S_{Y} nur fehlerhafte Anfragen an die Funktion F_{P, 2} übermitteln, um zu prüfen, ob die aktualisierte Implementierung die kritischen Anfragen korrekt bearbeiten kann.

Darüber hinaus besteht die Möglichkeit einer weiteren dritten Anwendung, um dynamische Änderungen von Ausführungsspuren durch einen Cyber-physikalischen Systemknoten durchzuführen. Es ist hier das Ziel, Attribute zu Steuertoken zu ergänzen, die zwischen den Cyber-physikalischen Systemknoten 32 ausgetauscht werden. Diese Steuertoken-Attribute können während des bestimmungsgemäßen Betriebs eines Cyber-physikalischen Systemknoten 32 analysiert werden, um weiteren Einblick in die Performance des Systemknotens 32 und den Betrieb zu gewinnen. Diese Attribute können dazu genutzt werden, alternative Funktionsimplementierungen dynamisch zu selektieren.

Ein Steuertoken, der in einem Cyber-physikalischen Systemknoten 32 von einer Funktion, einem Funktionsmodul zu einer Funktion beziehungsweise einem Funktionsmodul übermittelt wird, soll zusätzliche Buchhaltungsdaten übermitteln, wobei er vollständig unberücksichtigt durch die Funktion beziehungsweise das Funktionsmodul bleibt. Zum Beispiel kann der Steuertoken einen Funktionsantwortcode zwischen einer Anwendungsfunktion F_{C} und einer Steuerfunktion F_{P} übermitteln. Der Funktionsantwortcode wird nach jedem neuen Funktionsaufruf aktualisiert. Da der Steuertoken durch das Ankoppelmodul übermittelt wird, können extra-funktionale Dienste zum Ankoppelmodul hinzugefügt werden, die die Funktion des Steuertoken mit Attributen für jeden Funktionsaufruf während eines Workflows durch den Cyber-physikalischen Systemknoten 32 für erweiterte Performance-Analysen hinzufügt:
- Eine Identifikation für die betroffene Funktion F_{P}
- eine Eingriffszeit für die Funktion F_{P}
- eine Antwortzeit der Funktion F_{P}

Zusätzlich kann eine Identifizierung eines Workflow-Initiators zum Steuertoken des Workflows hinzugefügt werden. Der Initiator kann zum Beispiel einen Entwickler oder einen Betreiber des Cyber-physikalischen Systems identifizieren. Diese Information kann durch den extra-funktionalen Dienst genutzt werden, der alternative Funktionsimplementierungen, wie zum vorhergehenden Ausführungsbeispiel beschrieben, selektieren kann.

Die Erfindung hat insbesondere in Bezug auf AOP folgende Vorteile: AOP kann für die Hinzufügung von Diensten genutzt werden. Über den sogenannten Weaving-Prozess können Aspekte an Stellen integriert werden, an denen eine spezifische Bedingung erreicht wird. Die Bedingung ist gewöhnlich der Eintritt oder der Ausgang eines Funktionsaufrufs. Wenn der Steuerfluss einen solchen Punkt erreicht, wird ein Advice ausgeführt, beispielsweise vor oder nach dem Funktionsaufruf. Innerhalb des Advices kann jeglicher zusätzlicher Code angewendet werden. Deshalb kann ein AOP-Framework, wie beispielsweise AspektJ für Java-Systeme, anstelle von Connector-Pattern genutzt werden, was gemäß der Erfindung vorgeschlagen wird. Jedoch umfasst dies nur das Vorsehen eines Integrationspunkts für den Mechanismus, der gemäß der Erfindung vorliegend beschrieben wurde.

Im Unterschied zur AOP kann die Erfindung dazu genutzt werden, ohne zusätzliche Frameworks und/oder Compiler für Weaving Entry Points in das System zu benötigen. Darüber hinaus kann die Erfindung unter Nutzung irgendeiner Objektorientierten Programmiersprache realisiert werden. Im Unterschied zur Erfindung ändert AOP Schnittstellen wegen Bezeichnungen. AOP erfordert darüber hinaus spezifische Compiler, und Aspekte sind statisch. Jedoch kann AOP dazu genutzt werden, Implementierungen von extra-funktionalen Diensten in den Ankoppelmodulen zu realisieren. Es ist nicht COP, weil die Ankopplungsmodule und die extra-funktionalen Dienste dynamisch sind, während der Laufzeit adaptiert und gesteuert werden können, und darüber hinaus vollständig unabhängig von Funktionen des Cyber-physikalischen Systemknotens sind. COP ändert das System und erfordert daher eine Compilerunterstützung.

Die Ausführungsbeispiele dienen ausschließlich der Erläuterung der Erfindung und sollen diese nicht beschränken.

## Patentansprüche

1. Rechnerimplementiertes Verfahren zum Bereitstellen von wenigstens einem Dienst (10, 24) in einem Knoten beziehungsweise Prozess eines Cyber-physikalischen Systems mit wenigstens zwei Anwendungsmodulen (12, 14, 16), wobei eine Kommunikation zwischen den wenigstens zwei Anwendungsmodulen (12, 14, 16) über jeweilige anwendungsmodulspezifische angebotene Anwendungsschnittstellen (18, 20, 22, 26) der wenigstens zwei Anwendungsmodule (12, 14, 16) erfolgt, wobei eine jeweilige der anwendungsmodulspezifischen angebotenen Anwendungsschnittstellen (18, 20, 22, 26) einen Kommunikationszugang zum jeweiligen Anwendungsmodul darstellt,
**dadurch gekennzeichnet, dass**
zumindest die anwendungsmodulspezifischen angebotenen Anwendungsschnittstellen (18, 20, 22, 26) der wenigstens zwei Anwendungsmodule (12, 14, 16) durch ein Ankoppelmodul (28, 30) implementiert werden, welches die Kommunikation zwischen den wenigstens zwei Anwendungsmodulen (12, 14, 16) herstellt und welches den wenigstens einen Dienst (10, 24) aktivierbar bereitstellt.

2. Verfahren nach Anspruch 1, **dadurch gekennzeichnet, dass** der wenigstens eine Dienst über eine Diensteschnittstelle (86) des Ankoppelmoduls (28, 30) geladen wird, wobei der wenigstens eine Dienst (10, 24) vorzugsweise nach dem Laden in das Ankoppelmodul (28, 30) im Ankoppelmodul (28, 30) betrieben wird.

3. Verfahren nach Anspruch 2, **dadurch gekennzeichnet, dass** der wenigstens eine Dienst (10, 24) nach dem Betreiben aktivierbar bereitgestellt wird.

4. Verfahren nach einem der vorhergehenden Ansprüche, **dadurch gekennzeichnet, dass** für den wenigstens einen Dienst (10, 24) ein Eingriffspunkt (36) ermittelt wird.

5. Verfahren nach einem der vorhergehenden Ansprüche, **dadurch gekennzeichnet, dass** der Dienst (10, 24) abhängig von einem Steuersignal aktiviert wird.

6. Verfahren nach einem der vorhergehenden Ansprüche, **dadurch gekennzeichnet, dass** ein Funktionsaufruf (46, 74) eines der Anwendungsmodule (12, 14, 16) ermittelt wird und mittels des aktivierten Dienstes (10, 24) Daten des Funktionsaufrufs (46, 74) erfasst werden.

7. Verfahren nach einem der vorhergehenden Ansprüche, **dadurch gekennzeichnet, dass** eine Funktionsantwort (76) eines der Anwendungsmodule (12, 14, 16) ermittelt und mittels des aktivierten Dienstes (10, 24) Daten der Funktionsantwort (76) erfasst werden.

8. Verfahren nach Anspruch 6 oder 7, **dadurch gekennzeichnet, dass** die erfassten Daten ausgewertet werden und zumindest der Funktionsaufruf (46, 74) oder die Funktionsantwort (76) abhängig vom Auswerten der Daten angepasst werden, bevor der Funktionsaufruf (46, 74) beziehungsweise die Funktionsantwort (76) vom jeweiligen Ankoppelmodul (28, 30) an das jeweils andere Anwendungsmodul (12, 14, 16) übermittelt wird.

9. Verfahren nach einem der vorhergehenden Ansprüche, **dadurch gekennzeichnet, dass** der Dienst (10, 24) die Kommunikation zwischen den wenigstens zwei Anwendungsmodulen (12, 14, 16) erfasst, hinsichtlich vorgegebener Daten analysiert und abhängig von dem Analysieren ein Meldesignal abgibt.

10. Verfahren nach Anspruch 9, **dadurch gekennzeichnet, dass** im Rahmen des Analysierens ermittelt wird, ob wenigstens eines der Anwendungsmodule (12, 14, 16) bestimmungsgemäß funktioniert.

11. Verfahren nach Anspruch 10, **dadurch gekennzeichnet, dass** abhängig von der bestimmungsgemäßen Funktion des wenigstens einen Anwendungsmoduls (12, 14, 16) die Kommunikation zwischen wenigstens einem der wenigstens zwei Anwendungsmodule (12, 14, 16) und einem dritten Anwendungsmodul hergestellt wird.

12. Verfahren nach einem der vorhergehenden Ansprüche, **dadurch gekennzeichnet, dass** der Dienst (10, 24) zumindest eines der wenigstens zwei Anwendungsmodule (12, 14, 16) identifiziert und abhängig von der Identifikation aktiviert wird.

13. Rechnerprogrammprodukt umfassend ein Programm für eine Rechnereinheit, wobei das Programm Programmkodeabschnitte eines Rechnerprogramms zum Ausführen der Schritte eines Verfahrens nach einem der vorhergehenden Ansprüche aufweist, wenn das Rechnerprogramm durch die Rechnereinheit ausgeführt wird, sodass wenigstens ein Dienst (10, 24) in einer Kommunikation zwischen wenigstens zwei Anwendungsmodulen (12, 14, 16) eines Cyber-physikalischen Systems (32) aktivierbar bereitgestellt wird.

14. Elektronisch lesbarer Datenträger mit darauf gespeicherten elektronisch lesbaren Steuerinformationen, welche zumindest ein Rechnerprogrammprodukt nach Anspruch 13 umfassen und derart ausgestaltet sind, dass bei Steuerung einer Rechnereinheit unter Nutzung der Steuerinformationen des Datenträgers die Rechnereinheit ein Verfahren nach einem der Ansprüche 1 bis 12 durchführt.

15. Cyber-physikalisches System (32) mit einem Knoten beziehungsweise Prozess, der wenigstens zwei Anwendungsmodule (12, 14, 16) aufweist, wobei ein jeweiliges der wenigstens zwei Anwendungsmodule (12, 14, 16) eine jeweilige anwendungsmodulspezifische angebotene Anwendungsschnittstelle (18, 20, 22, 26) aufweist, über die eine Kommunikation zwischen den wenigstens zwei Anwendungsmodulen (12, 14, 16) erfolgt, wobei eine jeweilige der anwendungsmodulspezifischen angebotenen Anwendungsschnittstellen (18, 20, 22, 26) einen Kommunikationszugang zum jeweiligen Anwendungsmodul darstellt, **gekennzeichnet durch**
ein Ankoppelmodul (28, 30), in welchem zumindest die anwendungsmodulspezifischen angebotenen Anwendungsschnittstellen (18, 20, 22, 26) der wenigstens zwei Anwendungsmodule (12, 14, 16) implementiert sind und welches ausgebildet ist, die Kommunikation zwischen den wenigstens zwei Anwendungsmodulen (12, 14, 16) herzustellen und wenigstens einen Dienst (10, 24) aktivierbar bereitzustellen.

16. Ankoppelmodul (28, 30) des Cyber-physikalisches Systems (32) gemäß Anspruch 15, wobei das Ankoppelmodul (28, 30) ausgebildet ist, wenigstens einen Dienst (10, 24) in einer Kommunikation zwischen wenigstens zwei Anwendungsmodulen (12, 14, 16) aktivierbar bereitzustellen.
